# EUROPEAN PATENT SPECIFICATION

(11) **EP 2 736 212 B1**
(45) Date of publication and mention of the grant of the patent: **29.08.2018**
(21) Application number: 11865305.4
(22) Date of filing: 24.10.2011
(51) Int. Cl.: H04L 29/06, H04L 12/18, H04M 7/00, H04M 3/56, H04W 4/06

(54) **METHOD AND SYSTEM FOR IMPLEMENTING BROADCAST GROUP CALL IN CLICK TO DIAL SERVICE**
VERFAHREN UND SYSTEM ZUR IMPLEMENTIERUNG VON RUNDFUNKGRUPPENRUFEN IN EINEM CLICK-TO-DIAL-DIENST
PROCÉDÉ ET SYSTÈME DE MISE EN OEUVRE D'UN APPEL DE GROUPE DE DIFFUSION EN UN CLIC POUR APPELER UN SERVICE

(30) Priority: 21.07.2011 CN 201110205016
(43) Date of publication of application: 28.05.2014
(73) Proprietor: ZTE Corporation, Shenzhen, Guangdong 518057 (CN)
(72) Inventor: QU, Tianxi, Shenzhen Guangdong 518057 (CN); QIAN, Chen, Shenzhen Guangdong 518057 (CN)
(74) Representative: Raunecker, Klaus Peter
(86) International application number: PCT/CN2011/081182
(87) International publication number: WO 2012/151859

(56) References cited:
- EP-A1- 2 051 472
- CN-A- 1 968 218
- CN-A- 101 488 875
- CN-A- 101 860 542
- GB-A- 2 407 228
- US-A1- 2003 194 078
- US-A1- 2011 154 204
- DING KUN ZTE CORPORATION P R CHINA ET AL: "Proposal about new feature of rtconv service; D 600", ITU-T DRAFT STUDY PERIOD 2005-2008, INTERNATIONAL TELECOMMUNICATION UNION, GENEVA ; CH, vol. STUDY GROUP 13, 17 July 2006 (2006-07-17), pages 1-3, XP017406842,

## Description

### TECHNICAL FIELD

The disclosure relates to the field of intelligent network communications in an IP Multimedia Subsystem (IMS) and a Next Generation Network (NGN), to Click To Dial (CTD) and a broadcast group call, and particularly to a method and system for implementing a broadcast group call in a CTD service.

### BACKGROUND

The so-called CTD service is the click to dial service. A user logs in to a CTD WEB interface and inputs a logical calling number of such as a user A and a logical called number of such as a user B; a CTD application server first calls the logical calling number of the user A; after A picks up, the CTD application server then calls the logical called number of the user B; the logical called number B rings, A listens to the ringback tone, B goes off-hook, and A and B talk. I.e., the CTD service is a call-type service by which the telephone numbers of two parties between whom a user wish to conduct a conversation are bridged, so as to realize the conversion between the two parties.

The so-called broadcast group call means that the logical calling number of the user A simultaneously talks to multiple logical called numbers of users B1, B2 and so on. However, only the logical calling number user A can speak, the logical called number users B1, B2 and so on themselves cannot speak and can only hear the speech of the user A, which is similar to the broadcast in reality; while the call is initiated simultaneously to the users B1, B2 and so on, so it is also called as a group call. During the broadcast group call, the user A may also designate one of some users such as a user Bi as a chairman, such that both of the user A and the user Bi can speak. During the broadcast group call, the user A may also conduct a paged private chat with one of some users such as a user Bk, such that the user A and the user Bk conduct a private chat individually, and other users continue to maintain the original status. A user may continue to speak if he/she is designated as the chairman, and continues to listen to someone else's speech if not.

A conventional calling service is implemented by the user to directly dial a destination telephone number via a terminal (such as a fixed telephone, a cell phone and so on). While a CTD calling is a calling in which the CTD application server separately initiates two paths of telephone numbers which need to conduct a conversation.

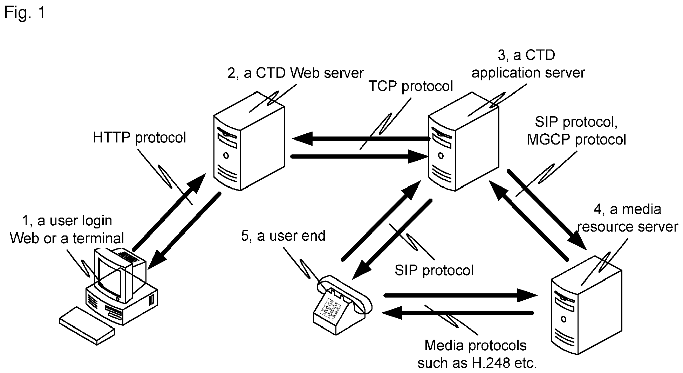

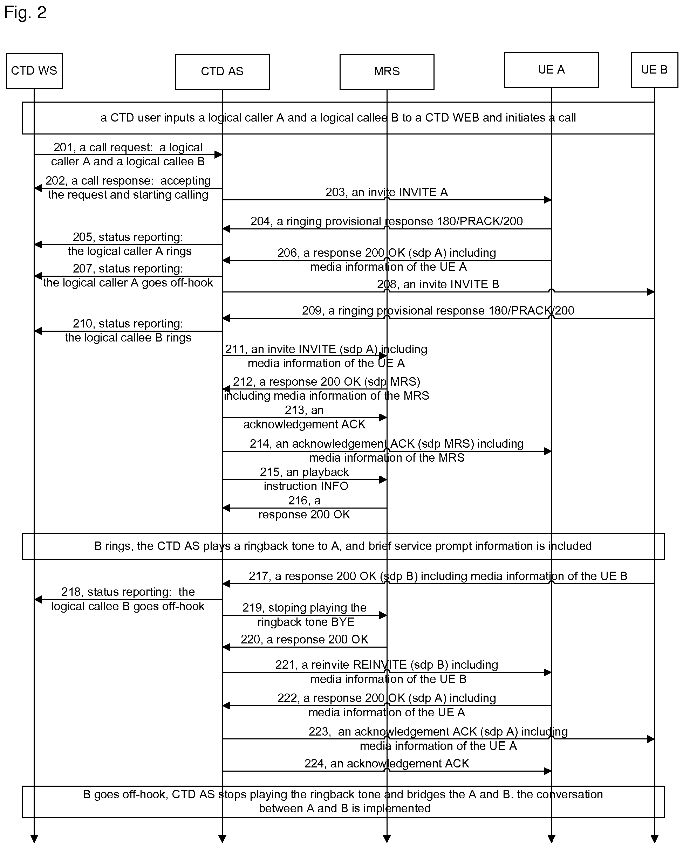

The conventional CTD service is widely used in modern communication networks, for example, WebCall, Web800 and so on all belong to the CTD calling service or derived services thereof. The user may view, through an operation interface of the CTD calling, a status of the current conversation (such as the telephone numbers and names of both parties of the conversation), and a status of the call (for example, a callee is ringing, the callee is answering, the callee is on-hook and the callee is placing the call on hold). In order to make the conversation interface more aesthetical, head portraits used by both parties or the like may be displayed on the interface, and the service may be further extended to implement an Instance Message (IM) service of the both parties of the conversation. The structural diagram of the conventional CTD service system is shown in Fig. 1, and the signaling flowchart is shown in Fig. 2.

Fig. 1 is an implementing flow of a CTD service, where function of each network element is described as follows.
1. A user logs in Web or a client software terminal: the user is provided with a device for initiating a call or control a call, such as a PC machine, 3G terminals, etc.
2. A CTD Web Server (CTD WS): which provides a CTD calling HTTP service function, login of users, filling in of call numbers, call control and information display interface and other functions.
3. A CTD Application Server (CTD AS): which provides underlying CTD service capabilities, such as: call controlling, status reporting, bill generating and other functions.
4. A Media Resource Server (MRS): which provides a voice media capability, and is typically a Media Server (MS) and generally used for playback and playback number receiving.
5. A User End (UE): which is used for calling of users, and has specific physical devices including a fixed telephone, a cell phone or a professional video call terminal, etc.

Protocols used in the specific network elements are as follows.
1. Between the user Web and the CTD WS is an HTTP service invocation, and the HTTP protocol is used.
2. Between the CTD WS and the CTD AS is an inter-server communication, the TCP protocol is used on a transport layer, XML and the like can be selected as an application layer protocol according to specific needs, and a TCP massage body may be customized or the TCP massage body structure defined below may be used if the application layer protocol is not used.
3. Between the CTD AS and the MRS or the UE is a media negotiation of a call conversation, the interworking between the CTD AS and the UE uses a Session Initiation Protocol (SIP) via the core network, and that between the CTD AS and the MRS typically uses the SIP protocol or a Media Gateway Control Protocol (MGCP), specifically depending on the type of the protocol supported by the MRS.
4. Between the UE and the MRS is a transmission of media streams, the decoding and encoding formats, sending and receiving ports, bandwidth transmission rate and others of the specific media packets of the UE and the MRS are determined according to the media negotiation between the terminal and the MRS during a call.

Note: Fig. 1 is a diagram of a profile only, and network topologies of the IMS or the NGN are concealed, while the CTD AS, the MRS and the UE access the IMS network or the NGN network in actual implementations.

Fig. 2 is a signaling flowchart of conventional CTD services, in which the CTD AS first calls a UE A, and then calls a UE B, and a bridging connection between the UE A and the UE B is established after the two users go off-hook, thereby implementing the conversation between the UE A and the UE B. However, the conventional CTD service can only implement the conversation between two parties and cannot achieve the broadcast group call.

In addition, the US Patent Application (Publication No. US 2011/154204 A1) relates to meeting and conferencing systems and methods. In the disclosure of US 2011/154204 (A1), a meeting system is implemented that includes a computer server arrangement with at least one processor. The computer server arrangement is configured to provide a web-based meeting-group subscription option to potential meeting participants. A meeting scheduling data is received over a web-accessible virtual meeting interface. The meeting scheduling data includes group identification information and meeting time information. In response to the group identification information, participant identification information is retrieved for participants that subscribe to a meeting group identified by the group identification information. In response to the meeting time information and the participant identifying information, audio connections are established for participants of the meeting. Merged audio from the established audio connections is provided to the participants over the established audio connections.

### SUMMARY

In view of this, the primary purpose of the disclosure is to provide a method and system for implementing a broadcast group call in a Click To Dial (CTD) service, which is used to resolve the technical problems with the conventional CTD service which cannot implement the group call of multiple logical callees and does not support functions such as broadcasting.

The features of the method and system according to the present invention are defined in the independent claims, and the preferable features according to the present invention are defined in the dependent claims.

In the disclosure, the signaling control and conference audio mixing are performed by a click to dial service application server and no specific terminal is required, and the group call and broadcasting of multiple logical callees can be implemented under the control of the click to dial service application server, every logical called user can access the call as long as he/she goes off-hook. The disclosure extends the functions of the existing click to dial service, extends the application of the click to dial service, and satisfies multiple demands of users.

### BRIEF DESCRIPTION OF THE DRAWINGS

Fig. 1 is a structural diagram of network elements of the disclosure;
Fig. 2 is a signaling flowchart of implementation of conventional CTD services;
Fig. 3 is a logical flowchart of implementation of the disclosure; and
Fig. 4 is a signaling flowchart of the detailed implementation of the disclosure.

### DETAILED DESCRIPTION

To make the purposes, technical solutions and advantages of the disclosure more apparent, description of the disclosure is given bellow in further detail by way of embodiments and with reference to the drawings.

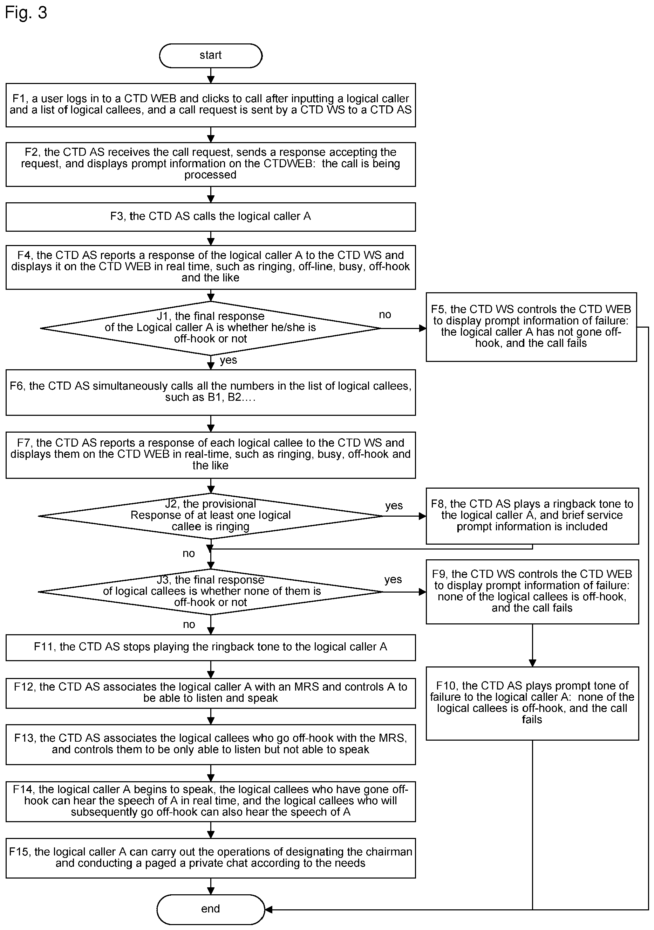

Fig. 3 is a flowchart of steps of a method for implementing a broadcast group call based on a CTD service according to the disclosure, and the disclosure is implemented as an extended function of the CTD service, the detailed steps are as follows.
Step F1, a user logs into a CTD WEB and clicks to call after inputting a logical caller and a list of logical callees, and a call request is sent by a CTD WS to a CTD AS.
Step F2, the CTD AS receives the call request, sends a response accepting the request to the CTD WS, and displays prompt information on the CTD WEB: the call is being processed.
Step F3, the CTD AS calls the logical caller A.
Step F4, the CTD AS reports a response of the logical caller A to the CTD WS and displays it on the CTD WEB in real time, such as ringing, off-line, busy, off-hook and the like.
Step J1, step F6 is performed if final response of the logical caller A is off-hook. Otherwise, step F5 is performed.
Step F5, the CTD WS controls the CTD WEB to display prompt information of failure: the logical caller A has not gone off-hook, the call fails, and the flow ends.
Step F6, the CTD AS simultaneously calls all the numbers in the list of logical callees, such as B1, B2....
Step F7, the CTD AS reports a response of each logical callee to the CTD WS and displays them on the CTD WEB in columns in real-time, such as ringing, off-line, busy, off-hook and the like.
Step J2, step F8 is performed if provisional response of at least one logical callee is ringing. Otherwise, step J3 is performed.
Step F8, the CTD AS plays a ringback tone to the logical caller A, and brief service prompt information is included.
Step J3, if none of final responses of the logical callees is off-hook, step F9 is performed. Otherwise, step F11 is performed.
Step F9, the CTD WS controls the CTD WEB to display prompt information of failure: none of the logical callees is off-hook, and the call fails.
Step F10, the CTD AS plays prompt tone of failure to the logical caller A: none of the logical callees is off-hook, the call fails, and the flow ends.
Step F11, the CTD AS stops playing the ringback tone to the logical caller A.
Step F12, the CTD AS associates the logical caller A with an MRS and controls A to be able to listen and speak.
Step F13, the CTD AS associates the logical callees who go off-hook with the MRS, and controls them to be only able to listen but not able to speak.
Step F14, the logical caller A begins to speak, the logical callees who have gone off-hook can hear the speech of A in real time, and the logical callees who will subsequently go off-hook can also hear the speech of A.
Step F15, the logical caller A designates a certain logical callee as the chairman as required, and the CTD AS will control the logical callee who becomes the chairman to be able to listen and speak; and/or, the logical caller A designates a certain logical callee B as a private chat object as required, and an individual private chat between the logical caller A and the logical callee B is conducted under the control of the CTD AS, and other users continue to maintain the original status.

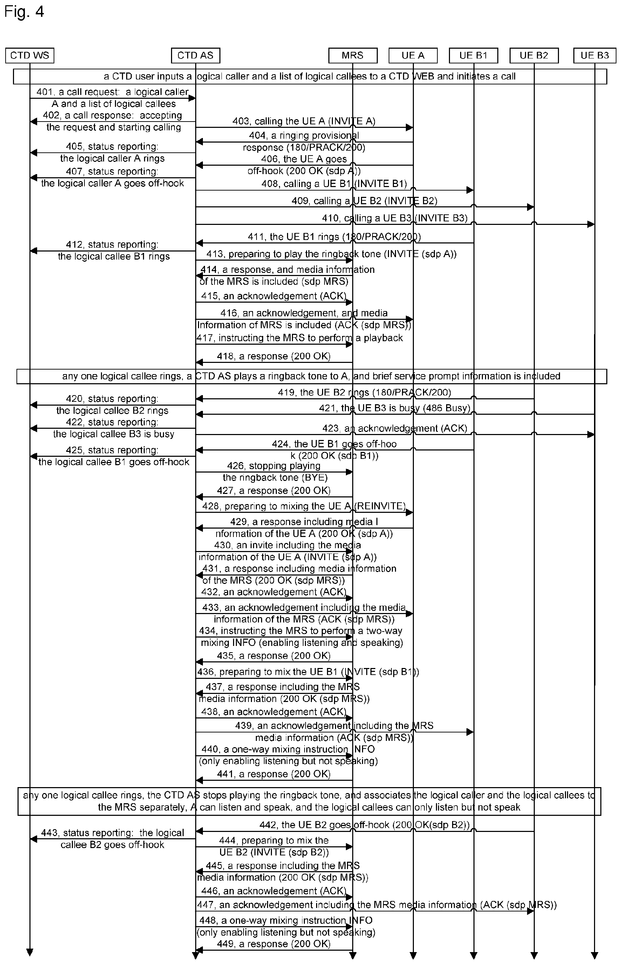

Fig. 4 is a signaling flowchart for implementing the broadcast group call based on the CTD service provided in the embodiments of the disclosure. In this flow, in the case of A as the logical caller and B1, B2, B3 as the list of logical callees, illustrations of the signaling flow for implementing the broadcast group call based on the CTD service are sequentially numbered:
Step 401, a CTD WS initiates a call request for a broadcast group call to a CTD AS, and some call information, such as the person who has the logical calling number, the list of logical callees B1, B2, B3 and so on, are included.
Step 402, the CTD AS returns call response of the broadcast group call to the CTD WS, indicating the call is being processed.
Step 403, the CTD AS sends an INVITE request to the UE A, and calls the UE A.
Step 404, the UE A rings, the UE A returns a 180 ringing provisional response to the CTD AS, if the 180 is reliable, the CTD AS is also required to return a PRACK provisional acknowledgement (Provisional ACK) to the UE A, and the UE A replies a 200 OK (PRACK) to the CTD AS.
Step 405, the CTD AS notifies the CTD WS of the status: the logical caller A rings.
Step 406, the UE A goes off-hook, the UE A replies a 200 OK (INVITE) response to the CTD AS, and media information of its own is included.
Step 407, the CTD AS notifies the CTD WS of the status: the logical caller A goes off-hook.
Step 408, the CTD AS sends an INVITE request to the UE B 1.
Step 409, the CTD AS sends an INVITE request to the UE B2.
Step 410, the CTD AS sends an INVITE request to the UE B3.
Step 411, the UE B1 rings, and the UE B1 returns a 180 ringing provisional response to the CTD AS, if the 180 is reliable, the CTD AS is also required to return a PRACK provisional acknowledgement to the UE B1, and the UE B1 replies a 200 OK (PRACK) to the CTD AS.
Step 412, the CTD AS notifies the CTD WS of the status: the logical callee B1 rings.
Step 413, the CTD AS prepares to play a ringback tone to the logical caller A, the CTD AS sends an INVITE request to an MRS, and media information of the UE A is included.
Step 414, the MRS replies a 200 OK (INVITE) response to the CTD AS, and media information of its own is included
Step 415, the CTD AS sends an ACK acknowledgement message to the MRS.
Step 416, the CTD AS sends an ACK acknowledgement message to the UE A, and media information of the MRS is included.
Step 417, the CTD AS sends an INFO instruction message to the MRS, instructing the MRS to perform a playback.
Step 418, the MRS replies a 200 OK (INFO) response to the CTD AS, at which time the UE A listens to the ringback tone.
Step 419, the UE B2 rings, the UE B2 returns a 180 ringing provisional response to the CTD AS, if the 180 is reliable, the CTD AS is also required to return a PRACK provisional acknowledgement to the UE B2, and the UE B2 replies a 200 OK (PRACK) to the CTD AS.
Step 420, the CTD AS notifies the CTD WS of the status: the logical callee B2 rings.
Step 421, the UE B3 is busy, and the UE B3 replies a 486 response to the CTD AS.
Step 422, the CTD AS notifies the CTD WS of the status: the logical callee B3 is busy.
Step 423, the CTD AS sends an ACK acknowledgement message to the UE B3.
Step 424, the UE B1 goes off-hook, the UE B1 replies a 200 OK (INVITE) response to the CTD AS, and media information of its own is included.
Step 425, the CTD AS notifies the CTD WS of the status: the logical callee B1 goes off-hook.
Step 426, the CTD AS stops playing the ringback tone to the UE, and the CTD AS sends a BYE request to the MRS.
Step 427, the MRS replies a 200 OK (BYE) response to the CTD AS.
Step 428, the CTD AS prepares to mix the UE A, and the CTD AS sends a REINVITE request to the UE A.
Step 429, the UE A replies a 200 OK (REINVITE) response to the CTD AS, and media information of its own is included.
Step 430, the CTD AS sends an INVITE request to the MRS, and media information of the UE A is included.
Step 431, the MRS replies a 200 OK (INVITE) response to the CTD AS, and media information of its own is included.
Step 432, the CTD AS sends an ACK acknowledgement message to the MRS.
Step 433, the CTD AS sends an ACK acknowledgement message to the UE A, and media information of the MRS is included.
Step 434, the CTD AS sends an INFO instruction message to the MRS, instructing the MRS to perform a mixing: a two-way mixing that enables listening and speaking.
Step 435, the MRS replies a 200 OK (INFO) response to the CTD AS, at which time the UE A can listen and speak.
Step 436, the CTD AS prepares to mix the UE B1, the CTD AS sends an INVITE request to the MRS, and media information of the UE B1 is included.
Step 437, the MRS replies a 200 OK (INVITE) response to the CTD AS, and media information of its own is included.
Step 438, the CTD AS sends an ACK acknowledgement message to the MRS.
Step 439, the CTD AS sends an ACK acknowledgement message to the UE B1, and media information of the MRS is included.
Step 440, the CTD AS sends an INFO instruction message to the MRS, instructing the MRS to perform a mixing: a one-way mixing that only enables listening but not speaking.
Step 441, the MRS replies a 200 OK (INFO) response to the CTD AS, at which time the UE B1 can only listen but not speak.
Step 442, the UE B2 goes off-hook, the UE B1 replies a 200 OK (INVITE) response to the CTD AS, and media information of its own is included.
Step 443, the CTD AS notifies the CTD WS of the status: the logical callees B2 goes off-hook.
Step 444, the CTD AS prepares to mix the UE B2, the CTD AS sends an INVITE request to the MRS, and media information of the UE B2 is included.
Step 445, the MRS replies a 200 OK (INVITE) response to the CTD AS, and media information of its own is included.
Step 446, the CTD AS sends an ACK acknowledgement message to the MRS.
Step 447, the CTD AS sends an ACK acknowledgement message to the UE B1, and media information of the MRS is included.
Step 448, the CTD AS sends an INFO instruction message to the MRS, instructing the MRS perform a mixing: a one-way mixing that only enables listening but not speaking.
Step 449, the MRS replies a 200 OK (INFO) response to the CTD AS, at which time the UE B2 can only listen but not speak.

Based on the method flow and signaling flowcharts for CTD service-based implementation of the broadcast group call provided in the present embodiment, an embodiment of the disclosure also provides a system for implementing a broadcast group call in a click to dial service, module functional structure of this system may still be based on the structure of existing CTD service system shown in Fig. 1, except that functions of the CTD WS, CTD AS and MRS in the existing CTD system are extended in the disclosure, thereby extended functions of group call of multiple logical callees, broadcasting and so on are implemented. The extended parts are all able to be directly derived from the above method flow and signaling flow, which will not be described in detail herein.

The method and system provided in the embodiments of the disclosure can implement the function of group call of multiple logical callees in the click to dial service, which function belongs to a B2B (Back to Back) calling type service, the advantages of which are:
(1) the signaling control and conference mixing and muting are controlled by a CTD service application server and no specific terminal is required, thus the logical caller and the logical callee are not limited by the type of user terminals, and terminals of existing types can all act as the logical caller or the logical callee;
(2) the function of the group call is implemented, multiple logical called user can be simultaneously called, i.e., the original user B is extended from one logical called user into multiple logical called users B1, B2... , and every logical called user can access the call as long as he/she goes off-hook
(3) the broadcasting function is implemented, only the logical calling user can speak and plays the role of an announcer in broadcasting, and the logical called users cannot speak but play the role of audiences, such a function can be widely used in, for example, important guidelines indication of a company, a fire emergency notification of a hotel, and voice listening service customized by specific populations, etc.;
(4) the function of designating and cancelling the chairman is supported, i.e., the function of adding or canceling the presenter during a calling can be implemented;
(5) the function of conducting a paged private chat is supported, and an individual two-party conversation between the logical calling user and any logical called user can be implemented.

The above-described are only preferred embodiments of the disclosure and are not intended to limit the scope of the disclosure.

### INDUSTRIAL APPLICABILITY

In the disclosure, the signaling control and conference mixing are performed by a click to dial service application server and no specific terminal is required, and the group call and broadcasting of multiple logical callees can be implemented under the control of the click to dial service application server, every logical called user can access the call as long as he/she goes off-hook. The disclosure extends the functions of the existing click to dial service, extends the application of the click to dial service, and satisfies multiple demands of users.

## Claims

1. A method for implementing a broadcast group call in a click to dial service, comprising:
sending, by a Click To Dial service WEB Server, CTD WS, (2) a call request to a Click To Dial service Application Server, CTD AS, (3) wherein the call request comprises a caller and a list of callees;
calling, by the CTD AS (3), the caller and conducting a group call on all the callees in the list of callees after the caller goes off-hook; and **characterized by**:
after any one callee in the list of callees goes off-hook, sending, by the CTD AS (3), an instruction message to a Media Resource Server, MRS, (4) instructing the MRS (4) to perform a two-way mixing on the caller such that the caller is enabled to listen and speak; and sending, by the CTD AS (3), an instruction message to the MRS (4), instructing the MRS (4) to perform a one-way mixing on the callee who has currently gone off-hook such that the callee who has currently gone off-hook is enabled to only listen but not speak.

2. The method according to claim 1, further comprising: before the CTD AS associates the caller with the MRS,
determining, by the CTD AS, whether there is any callee in the list of the callees goes off-hook, and associating the caller with the MRS when determining that any one callee in the list of the callees goes off-hook; and
terminating, by the CTD AS, the calling flow when finally determining that none of the callees goes off-hook.

3. The method according to claim 2, further comprising:
playing, by the CTD AS, a ringback tone to the caller when the caller goes off-hook and the CTD AS determines that a provisional response of at least one callee is ringing; and
stopping, by the CTD AS, playing the ringback tone to the caller after the CTD AS determines that at least one callee goes off-hook.

4. The method according to claim 3, further comprising:
designating, by the caller, a certain callee as a chairman as required, and controlling, by the CTD AS, the callee who becomes the chairman to be able to listen and speak; and/or, designating, by the caller, a certain callee as a private chat object as required, and controlling, by the CTD AS, the caller and the callee who becomes the private chat object to conduct an individual private chat.

5. The method according to claim 1, further comprising:
reporting, by the CTD AS, current statuses of the caller and the callees to the CTD WS, and displaying, by the CTD WS, the current statuses of the caller and the callees for a user.

6. A system for implementing a broadcast group call in a click to dial service comprising a Click To Dial service WEB Server, CTD WS, (2) a Media Resource Server, MRS, (4) and a Click To Dial service Application Server, CTD AS, (3) wherein
the CTD WS (2) is configured to send a call request to the CTD AS (3), wherein the call request comprises a caller and a list of callees;
the CTD AS (3) is configured to call the caller and to conduct a group call on all the callees in the list of callees after the caller goes off-hook; and **characterized by**:
after any one callee in the list of callees goes off-hook, the CTD AS (3) is further configured to send an instruction message to the MRS (4), instructing the MRS (4) to perform a two-way mixing on the caller such that the caller is enabled to listen and speak; and send an instruction message to the MRS (4), instructing the MRS (4) to perform a one-way mixing on the callee who has currently gone off-hook such that the callee who has currently gone off-hook is enabled to only listen but not speak.

7. The system according to claim 6, wherein the CTD AS is also configured to terminate the calling flow when determining that none of the callees goes off-hook.

8. The system according to claim 6, wherein the CTD AS is also configured to:
play a ringback tone to the caller when the caller goes off-hook and the CTD AS determines that a provisional response of at least one callee is ringing; and to stop playing the ringback tone to the caller after the CTD AS determines that at least one callee goes off-hook.

9. The system according to claim 8, wherein
when the caller designates a certain callee as a chairman, the CTD AS is further configured to control the callee who becomes the chairman to be able to listen and speak; and/or,
when the caller designates a certain callee as a private chat object, the CTD AS is further configured to control the caller and the callee designated as the private chat object to conduct an individual private chat.

10. The system according to claim 8, wherein
the CTD AS is further configured to report current statuses of the caller and the callees to the CTD WS; and
the CTD WS is further configured to display the current statuses of the caller and the callees for a user.

## Patentansprüche

1. Verfahren zum Implementieren eines Sendergruppen-Rufs in einem Click to Dial Service, aufweisend:
Senden einer Rufanfrage mittels eines Click to Dial Service Web-Servers CTD WS (2) an einen Click to Dial Anwendungsserver CTD AS (3), wobei die Rufanfrage einen Anrufer und eine Liste Angerufener aufweist;
Anrufen mittels des CTD AS (3), des Anrufers und Durchführen eines Gruppenanrufs aller Angerufenen auf der Liste der Angerufenen, nachdem der Anrufer den Hörer abhebt, und **dadurch gekennzeichnet, dass**:
nachdem irgendeiner der Angerufenen abgehoben hat, Senden mittels des CTD AS (3) einer Instruktionsnachricht an einen Media Resource Server MRS (4), die den MRS (4) instruiert, eine Zwei-Wege-Mischung des Anrufers derart durchzuführen, dass der Anrufer in der Lage ist, zu hören und zu sprechen;
und Senden mittels des CTD AS (3) eine Instruktionsnachricht an den MRS (4), die den MRS (4) instruiert, eine Ein-Wegs-Mischung des Angerufenen, der aktuell den Hörer abgehoben hat, derart durchzuführen, dass der Angerufene, der aktuell den Hörer abgehoben hat, in der Lage ist, nur zu hören jedoch nicht zu sprechen.

2. Verfahren nach Anspruch 1, ferner aufweisend:
bevor der CTD AS den Anrufer mit dem MRS verbindet,
Bestimmen mittels des CTD AS, ob in der Liste der Angerufenen ein Angerufener den Hörer abgehoben hat, und Verbinden des Anrufers mit dem MRS, wenn bestimmt wird, dass irgendeiner der Angerufenen von der Liste der Angerufenen den Hörer abgehoben hat; und
Beenden mittels des CTD AS des Rufflusses, wenn abschließend bestimmt wird, dass keiner der Angerufenen den Hörer abgehoben hat.

3. Verfahren nach Anspruch 2, ferner aufweisend:
Abspielen mittels des CTD AS eines Rückruftons für den Anrufer, wenn der Anrufer abhebt und das CTD AS bestimmt, dass eine provisorische Antwort von wenigstens einem der Angerufenen läutet; und
Anhalten mittels des CTD AS des Abspielens des Rückruftons für den Anrufer, wenn das CTD AS bestimmt, dass wenigstens einer der Angerufenen abhebt.

4. Verfahren nach Anspruch 3, ferner aufweisend:
Benennen durch den Anrufer eines bestimmten Angerufenen als Vorsitzenden, wie erforderlich, und Steuern, mittels des CTD AS, des Angerufenen, der Vorsitzender wird, wer in der Lage sein soll, zu hören und zu sprechen;
und/oder
Benennen durch den Anrufer eines bestimmten Angerufenen als privates Chatobjekt, wie erforderlich, und Steuern, mittels des CTD AS, des Anrufers und des Angerufenen, die das private Chatobjekt werden, um einen individuellen privaten Chat durchzuführen.

5. Verfahren nach Anspruch 1, ferner aufweisend:
Berichten mittels des CTD AS, der aktuellen Stati des Anrufers und der Angerufenen an das CTD WS, und Anzeigen mittels des CTD WS, der aktuellen Stati des Anrufers und der Angerufenen für einen Anwender.

6. Anordnung zum Implementieren eines Nachrichten -Gruppen-Anrufs in einem Click to Dial Service, aufweisend:
einen Click to Dial Service Web-Servers CTD WS (2),
einen Media Resource Server MRS (4), und
einen Click to Dial Anwendungsserver CTD AS (3),
wobei der CTD WS (2) dazu ausgebildet ist, eine Rufanfrage an den CTD AS (3) zu senden,
wobei die Rufanfrage einen Anrufer und eine Liste Angerufener aufweist;
wobei der CTD AS (3) dazu ausgebildet ist,
den Anrufer anzurufen und einen Gruppenanruf aller Angerufenen auf der Liste der Angerufenen durchzuführen, nachdem der Anrufer den Hörer abhebt,
und **dadurch gekennzeichnet, dass**:
nachdem irgendeiner der Angerufenen abgehoben hat, ist das CTD AS (3) weiterhin dazu ausgebildet, eine Instruktionsnachricht an den MRS zu senden, die den MRS (4) instruiert, eine Zwei-Wege-Mischung des Anrufers derart durchzuführen, dass der Anrufer in der Lage ist, zu hören und zu sprechen;
und eine Instruktionsnachricht an den MRS (4) zu senden, die den MRS (4) instruiert, eine Ein-Wegs-Mischung des Angerufenen, der aktuell den Hörer abgehoben hat, derart durchzuführen, dass der Angerufene, der aktuell den Hörer abgehoben hat, in der Lage ist, nur zu hören jedoch nicht zu sprechen.

7. Anordnung nach Anspruch 6, wobei das CTD AS auch dazu ausgebildet ist, den Ruffluss zu beenden, wenn abschließend bestimmt wird, dass keiner der Angerufenen den Hörer abgehoben hat.

8. Anordnung nach Anspruch 6, wobei das CTD AS auch dazu ausgebildet ist:
Abspielen eines Rückruftons für den Anrufer, wenn der Anrufer abhebt und das CTD AS bestimmt, dass eine provisorische Antwort von wenigstens einem der Angerufenen läutet; und
Anhalten des Abspielens des Rückruftons für den Anrufer, wenn das CTD AS bestimmt, dass wenigstens einer der Angerufenen abhebt.

9. Anordnung nach Anspruch 8, wobei
wenn der Anrufer einen bestimmten Angerufenen als Vorsitzenden benennt, das CTD AS weiter dazu ausgebildet ist, zu steuern, dass der Angerufene, der Vorsitzender wird, in der Lage sein soll, zu hören und zu sprechen; und/oder wenn der Anrufer eines bestimmten Angerufenen als privates Chatobjekt benennt, das CTD AS weiter dazu ausgebildet ist, zu steuern, dass der Anrufer und der Angerufene, die das private Chatobjekt werden, einen individuellen privaten Chat durchführen.

10. Anordnung nach Anspruch 8, wobei
das CTD AS ferner dazu ausgebildet ist, die aktuellen Stati des Anrufers und der Angerufenen an das CTD WS zu berichten, und wobei das CTD AS ferner dazu ausgebildet ist, die aktuellen Stati des Anrufers und der Angerufenen für einen Anwender anzuzeigen.

## Revendications

1. Procédé de mise en oeuvre d'un appel de groupe de diffusion par un clic pour appeler un service, comprenant :
l'envoi, par un Clic au serveur Internet du service de numérotation, CTD WS (2), d'une requête d'appel à un Clic
pour choisir un service d'appel, CTD AS, (3)
dans lequel l'appel comprend un appelant et une liste d'appelés ;
l'appel par le CTD AS (3),
l'appelant et menant un appel de groupe vers les appelés de la liste des appelés, après que l'appelant décroche et
**caractérisé par** :
après que n'importe lequel des appelés de la liste des appelés décroche, l'envoi par le CTD AS (3) d'un message d'instruction au serveur de Resource Media, MRS (4), de donner l'ordre au MRS (4)
pour effectuer
un mixage bidirectionnel vers l'appelant de telle manière que l'appelant soit autorisé à écouter et parler ; et
envoyer par le CTD AS (3), un message d'instructions au MRS (4),
instruisant le MRS (4) pour
effectuer un mixage monodirectionnel vers l'appelé qui à ce moment a décroché, de telle manière que l'appelé qui à ce moment a décroché soit autorisé à seulement entendre mais non parler.

2. Procédé selon la revendication 1, comprenant en outre : avant que le CTS AS associe l'appelant avec le MRS,
déterminer, par le CTD AS, soit s'il y a un appelé dans la liste des appelés qui a décroché, et associer l'appelant avec le MRS lorsqu'il est déterminé que n'importe lequel des appelés de la liste des appelés a décroché ; et
terminer par le CTD AS, le flux d'appels, lorsque finalement il est déterminé que aucun des appelés n'a décroché.

3. Procédé selon la revendication 2, comprenant en outre :
l'interprétation par le CTD AS, d'une tonalité de retour d'appel vers l'appelant lorsque l'appelant décroche et le CTD AS détermine qu'une réponse provisoire d'au moins un des appelés est faite, et
l'arrêt par le CTD AS, de l'interprétation d'une tonalité de retour d'appel vers l'appelant après que le CTS AS détermine que au moins un des appelés décroche.

4. Procédé selon la revendication 3, comprenant en outre :
la désignation par l'appelant d'un certain appelé comme directeur selon les besoins, et le contrôle par le CTD AS, l'appelé qui devient le directeur étant capable d'écouter et de parler ; et/ou la désignation par l'appelant, d'un certain appelé comme un objet de discussion privé selon les besoins, et le contrôle, par le CTD AS, de l'appelant et de l'appelé qui devient l'objet de discussion privé pour avoir une discussion individuelle privée.

5. Procédé selon la revendication 1, comprenant en outre :
la signalisation, par le CTD AS, des états actuels de l'appelant et des appelés vers le CTD WS, et l'affichage par le CTD WS des états actuels de l'appelant et des appelés pour un utilisateur.

6. Système pour la mise en oeuvre d'un appel de groupe de diffusion par un clic pour appeler un service comprenant un clic au serveur Internet du service de numérotation, CTD WS (2),
un serveur de Resource Media,
MRS (4) et un Clic pour sélectionner un serveur de services d'applications, CTD WS (3), dans lequel
le CTD WS (2) est configuré pour envoyer une requête d'appel au CTD AS (3),
dans lequel la requête d'appel comprend un appelant et une liste d'appelés ;
le CTD AS (3)
est configuré pour appeler l'appelant et pour conduire un groupe d'appels vers tous les appelés de la liste des appelés après que l'appelant raccroche ; et
**caractérisé en ce que** ;
après que chacun des appelés de la liste des appelés raccroche, le CTD AS (3) est en outre configuré pour envoyer un message d'instruction au MRS (4), donnant des instructions au MRS (4)
pour effectuer un mixage bidirectionnel vers l'appelant de telle manière que l'appelant soit autorisé à entendre et à parler ; et d'envoyer un message d'instructions au MRS (4)
instruisant le MRS (4)
pour effectuer un mixage monodirectionnel vers l'appelé qui à ce moment a décroché, de telle manière que l'appelé qui à ce moment a décroché soit autorisé à seulement entendre mais non parler.

7. Système selon la revendication 6, dans lequel le CTD AS est aussi configuré pour terminer le flux d'appels après la détermination qu'aucun des appelés n'a décroché.

8. Système selon la revendication 6, dans lequel le CTD AS est aussi configuré pour jouer une tonalité de retour d'appel vers l'appelant lorsque l'appelant décroche et le CTD AS détermine si une réponse provisoire d'au moins un des appelés sonne; et pour arrêter la tonalité de retour d'appel vers l'appelant après que le CTD AS ait déterminé qu'au moins un des appelés décroche.

9. Système selon la revendication 8, dans lequel,
lorsque l'appelant désigne un certain appelé comme un directeur, le CTD AS est en outre configuré pour contrôlé l'appelé qui devient le directeur, s'il est en mesure d'écouter et de parler, et/ou
lorsque l'appelant désigne un certain appelé comme un objet de discussion privée, le CTD AS est en outre configuré pour contrôler l'appelant désigné comme objet de discussion privée, pour conduire un entretien individuel privé.

10. Système selon la revendication 8, dans lequel
le CTD AS est en outre configuré pour signaler les états actuels de l'appelant et des appelés vers le CTD WS ; et
le CTD WS est en outre configuré pour afficher les états actuels de l'appelant et des appelés pour un utilisateur.
